## Europäisches Patentamt

## European Patent Office

## Office européen des brevets

(11) Veröffentlichungsnummer: **0 167 775**
**B1**

(12) **EUROPÄISCHE PATENTSCHRIFT**

(45) Veröffentlichungstag der Patentschrift:
**12.04.89**

(21) Anmeldenummer: **85106543.3**

(22) Anmeldetag: **29.05.85**

(51) Int. Cl.⁴: **B 29 C 39/14,** B 29 C 39/18, B 29 C 39/24, B 29 D 30/54 // B29L30:00, B29L31:52

(54) Verfahren und Vorrichtung zum kontinuierlichen Herstellen von Gegenständen oder Beschichtungen mit kompliziert geformten Konturen.

(30) Priorität: **08.06.84 DE 3421363**

(43) Veröffentlichungstag der Anmeldung:
**15.01.86 Patentblatt 86/3**

(45) Bekanntmachung des Hinweises auf die Patenterteilung:
**12.04.89 Patentblatt 89/15**

(84) Benannte Vertragsstaaten:
**AT BE DE FR GB IT SE**

(56) Entgegenhaltungen:
**DE-A- 1 504 113**
**DE-B- 2 123 902**
**US-A- 4 309 375**

(73) Patentinhaber: **BAYER AG, Konzernverwaltung RP Patentabteilung, D-5090 Leverkusen 1 Bayerwerk (DE)**

(72) Erfinder: **Grimm, Wolfgang, In Holzhausen 81, D-5090 Leverkusen 3 (DE)**
Erfinder: **Barnes, James Michael, Bechhausen 60, D-5632 Wermelskirchen 1 (DE)**

### Beschreibung

Die Erfindung richtet sich auf ein Verfahren und eine Vorrichtung zum kontinuierlichen Herstellen von Gegenständen oder Beschichtungen mit kompliziert geformten Konturen, wobei ein flüssiges Material in den zwischen mindestens zwei wandernden endlosen formgebenden Flächen gebildeten Formhohlraum an einem Ende eingebracht wird, im Formhohlraum aushärtet und anschliessend entformt wird.

Es ist seit längerem bekannt, durch Aufgiessen von reagierenden Polymeren auf rotierende Körper ohne Formwerkzeug eine glatte Aussenbeschichtung zu erreichen.

Es ist auch bekannt (DE-OS 3 200 063) Zahnriemen dadurch herzustellen, dass man einen flüssigen Kunststoff mittels einer Aufgabevorrichtung in einen seitlich und eingangsseitig völlig abgedichteten Formhohlraum aus wandernden Flächen eingibt. Die eingangsseitige Abdichtung ist sehr aufwendig und störanfällig; sie stellt insbesondere dann hohe Anforderungen, wenn noch zusätzlich Verstärkungseinlagen eingeführt werden sollen.

Es besteht die Aufgabe, ein Verfahren und eine Vorrichtung zu schaffen, womit Gegenstände oder Beschichtungen mit kompliziert geformten Konturen aus flüssigem Material herstellbar sind, wobei eine abdichtungsfreie Zufuhr von Material und gegebenenfalls Verstärkungseinlagen möglich ist. Dabei ist auch die vollständige und gleichmässige Ausfüllung des wandernden Formhohlraumes sicherzustellen.

Diese Aufgabe wird dadurch gelöst, dass die wandernden Flächen zumindest im Bereich der Materialaufgabe abwärts bewegt werden und der Strahl zugeführten Materials quer zur Vorschubrichtung der Flächen hin und her geführt wird; und dass dabei unter Berücksichtigung der Vorschubgeschwindigkeit der Flächen und der jeweiligen Weite des Hohlraumes unterhalb des Strahles die zugeführte Materialmenge im Sinne einer gleichmässig überschichtenden Füllung des Formhohlraumes gesteuert wird.

Gegenüber allen bisher bekannten Verfahren erlaubt das neue Verfahren Gegenstände oder Beschichtungen herzustellen, gleichgültig in welcher Richtung sie konturiert sind. Dabei ist eine Abdichtung der Eingangsseite des Formhohlraumes nicht erforderlich.

Vorzugsweise wird die Steuerung durch Variation der Vorschubgeschwindigkeit der wandernden Flächen bewirkt. Nach einer anderen Durchführungsform des Verfahrens wird die Steuerung bei gleichbleibender Zuführmenge durch Variation der Oszillationsgeschwindigkeit des Strahles bewirkt.

Alternativ hierzu wird die Steuerung bei gleichbleibender Oszillationsgeschwindigkeit des Strahles durch Variation der Zuführmenge bewirkt.

Obwohl aufgrund der heutigen Techniken beide Varianten durchführbar sind, erscheint die erste Variante vorteilhafter, weil es einfacher erscheint, mittels einer Programmsteuerung die Oszillationsgeschwindigkeit des Strahles zu variieren als die Zuführmenge zu beeinflussen. Da man bei der zweiten Variante auf die Dosierpumpen einwirken müsste, entstünde eine gewisse Trägheit im Zuführsystem.

Die Steuerung erfolgt also in der Weise, dass der hin- und hergehende Strahl genau abgestimmt an Stellen geringerer Stärke des herzustellenden Gegenstandes bzw. Beschichtung schneller wandert als an Stellen grösserer Stärke. Verläuft die Konturierung des herzustellenden Gegenstandes quer, so bleibt zwar die Oszillationsgeschwindigkeit während eines Hubes konstant, ändert sich aber zwischen den Hüben entsprechend dem auszufüllenden Volumen.

Als flüssiges Material werden vorzugsweise Polymerverbindungen, wie Polyurethanelastomere auf Basis Polyether und/oder Polyester, vorzugsweise mit einer Aushärtezeit von 0,5 bis 180 Sekunden verwendet.

Dieses Material ist wegen seiner besonderen Eigenschaften für viele Anwendungsbereiche besonders begehrt, und durch die neue Herstellungstechnik werden die Anwendungsmöglichkeiten erweitert. Selbstverständlich lassen sich aber auch Thermoplaste aus der Schmelze, Polyester oder Epoxidharze verarbeiten.

Die Vorrichtung zur Durchführung des neuen Verfahrens geht aus von mindestens zwei umlaufenden endlosen Flächen, von denen mindestens eine sich aus einzelnen Formsegmenten zusammensetzt, wobei diese Flächen zwischen sich einen seitlich abgedichteten Formhohlraum einschliessen und am Eingang des Formhohlraumes eine Aufgabevorrichtung angeordnet ist.

Das Neue ist darin zu sehen, dass die wandernden Flächen im Bereich der Aufgabevorrichtung abwärts gerichtet sind und dass die Aufgabevorrichtung quer hin- und herfahrbar ist und die Antriebe der Aufgabevorrichtung und/oder der der Aufgabevorrichtung zugeordneten Pumpe(n) mit einem Programmsteuergerät verbunden sind.

Dadurch wird konstruktiv eine Vereinfachung erreicht, in dem die Aufgabestelle selbst nicht abgedichtet ist sondern die Aufgabevorrichtung direkt in den offenen Eingang des Formhohlraumes hinweist. Die Koppelung des Antriebs bzw. der Pumpen oder entsprechender Elemente der Aufgabevorrichtung erlaubt es, die Zuführmenge des flüssigen Materials jeweils exakt auf das in jedem Zeitpunkt auszufüllende Volumen abzustimmen.

Nach einer besonderen Ausführungsform stellt ein Rotationskörper eine der wandernden Flächen dar, dessen Umfangsfläche teilweise von den Formsegmenten der anderen wandernden Fläche unter Bildung des Formhohlraumes abgedeckt ist.

Diese Ausführungsform erlaubt das direkte Beschichten von Rotationskörpern oder die Herstellung von rotationssymmetrischen Gegenständen.

Nach einer weiteren besonderen Ausführungsform besteht der Rotationskörper aus einem runderneuerungsbedürftigen Fahrzeugreifen.

Auf diese Weise gelingt es, insbesondere Polyurethangrossreifen, wie sie beispielsweise für Erdbewegungsmaschinen benutzt werden, mit relativ geringem maschinellen Aufwand mit einer neuen Laufdecke zu versehen.

Nach einer weiteren besonderen Ausführungsform besteht der Rotationskörper aus einem zu beschichtenden Walzenkörper.

Die neue Vorrichtung erlaubt es, eine Beschichtung gleichbleibender Stärke oder eine Beschichtung mit Profilierung herzustellen.

Bei Rotationskörpern grösseren Durchmessers lassen sich gegebenenfalls zwei wandernde Gegenflächen mit Aufgabevorrichtungen anordnen, so dass in einem Arbeitsgang mehrere Schichten aufgebracht werden können. Es ist auch denkbar, sofern die seitliche Abdichtung entsprechend gestaltet ist, nach einer ersten Beschichtungsumdrehung des Rotationskörpers die beiden den Formhohlraum bildenden wandernden Flächen etwas auseinanderzufahren, so dass ein zweiter und gegebenenfalls noch weitere Beschichtungsvorgänge stattfinden können.

Es versteht sich auch, dass nach einem ersten Beschichtungsvorgang entweder der Rotationskörper einer zweiten Gegenfläche zugeführt wird oder alternativ eine zweite Gegenfläche dem Rotationskörper. Diese Ausführungsform bietet sich für grössere Stückzahlen an.

Nach einer weiteren besonderen Ausführungsform der Vorrichtung bestehen die wandernden Flächen aus über Umlenkwalzen umlaufenden endlosen parallel angeordneten Bändern, von denen mindestens eines Formsegmente aufweist, wobei den Bändern im Bereich des gebildeten Formhohlraumes rückseitig Abstützungen zugeordnet sind.

Entgegen den vorbeschriebenen Ausführungsformen, bei denen der Formhohlraum gekrümmt ist, verläuft er hier gerade. Diese Ausführungsform eignet sich besonders gut für die Herstellung von bandartigen endlosen Gegenständen grösserer Dimensionen.

Es versteht sich, dass die neue Vorrichtung durch an sich bekannte Hilfsvorrichtungen zum Einführen von Verstärkungseinlagen in Form von Gewebebändern, endlosen Rovings, Faservliesen usw., aus Glasfasern, Kunststoffen oder Metall ergänzt sein kann.

In der Zeichnung ist die neue Vorrichtung in mehreren Ausführungsbeispielen für verschiedene Anwendungen rein schematisch dargestellt und nachstehend näher erläutert. Es zeigen:

Fig. 1 eine Ausführungsform der Vorrichtung zum Herstellen von Zahnriemen in der Seitenansicht,

Fig. 2 eine Frontansicht der Materialaufgabe zur Vorrichtung gemäss Figur 1,

Fig. 3 eine Ausführungsform der Vorrichtung zum Runderneuern von Fahrzeugreifen in der Seitenansicht,

Fig. 4 einen Schnitt gemäss Linie A, B in Figur 3,

Fig. 5 eine Ausführungsform der Vorrichtung zum Herstellen eines Förderbandes mit Fördertaschen,

Fig. 6 einen gefertigen Walzenbezug in räumlicher Darstellung,

Fig. 7 einen Querschnitt durch den Walzenbezug gemäss Figur 6 und

Fig. 8 einen Querschnitt durch eine abgewandelte Ausführungsform des Walzenbezuges gemäss Figur 6.

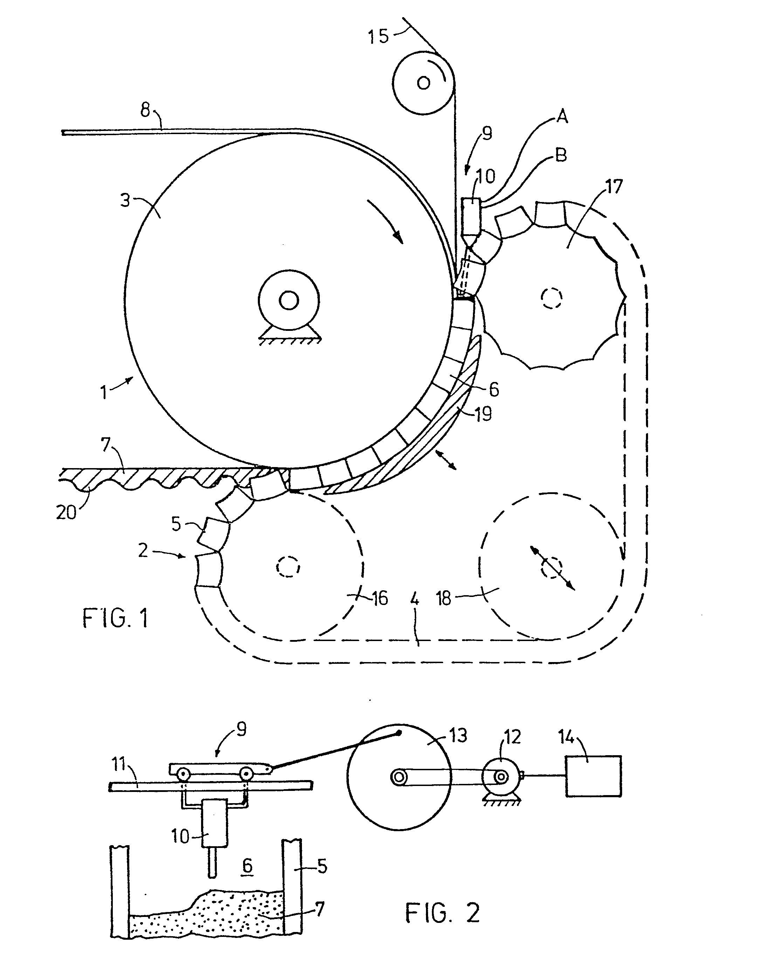

In Figur 1, 2 besteht die Vorrichtung aus zwei formgebenden Flächen 1, 2. Die Fläche 1 stellt die Umfangsfläche einer Trommel 3 dar. Die Fläche 2 besteht aus einer endlosen Kette 4 aus Formsegmenten 5. Die formgebenden Flächen 1, 2 schliessen zwischen sich einen Formhohlraum 6 ein, welcher sich über einen gewissen Teil des Umfanges der Trommel 3 erstreckt. Die Länge dieses Formhohlraumes 6 ist von der Vorschubgeschwindigkeit der Flächen 1, 2 in der Weise abhängig, dass der produzierte Gegenstand beim Verlassen des Formhohlraumes 6 bereits Formstabilität aufweisen soll. Über die Trommel 3 wird eine Trägermaterialbahn 8 aus Gewebe zugeführt, welche von dem zugegebenen flüssigen Material, einem thermoplastischen Polyurethanelastomer in flüssiger Form, durchtränkt wird, bevor dieses Material aushärtet. Mit einer Aufgabevorrichtung 9, welche gleichzeitig als Mischaggregat dient, werden flüssige Komponenten A (Polyol) und B (Isocyanat) zugeführt und miteinander vermischt, wobei sie reagieren und das Gemisch in den Formhohlraum 6 eingegeben.

Die Aufgabevorrichtung 9 besteht aus einem Mischkopf 10, welcher auf Schienen 11 quer zur Vorschubrichtung der Flächen 1, 2 hin- und herfahrbar ist. Als Antrieb dient ein Elektromotor 12 und Kurbeltrieb 13 mit einstellbarem Hub. Die Hubgeschwindigkeit der Aufgabevorrichtung 9 muss so gross sein, dass sich die neu aufgelegte Schicht jeweils mit der darunterliegenden verbindet, bevor diese ausgehärtet ist. Die Aufgabevorrichtung 9 ist mit einem schematisch angedeuteten Programmsteuergerät 14 gekoppelt. Es gibt in der Weise Befehle, dass (bei gleichförmiger Vorschubgeschwindigkeit der Flächen 1, 2), wenn jeweils ein Zahn 20 des Zahnriemens 7 zu bilden ist, die Aufgabevorrichtung 9 entsprechend langsamer oszilliert, so dass genügend Material zugeführt wird. In den Formhohlraum 6 wird zusätzlich eine Verstärkungseinlage 15 kontinuierlich eingeführt. Die Kette 4 aus Formsegmenten 5 läuft über Umlenkrollen 16, 17 und ein Spannrad 18 um. Die Umlenkrollen 16, 17 sind zur Trommel 3 hin verschiebbar, so dass erforderlichenfalls die Höhe des Formhohlraumes einstellbar ist. Im Bereich der Umschlingung der Trommel 3 durch die Kette 4 aus Formsegmenten 5 ist letztere zwischen den Umlenkrollen 16, 17 durch einen Gleitschuh 19 abgestützt.

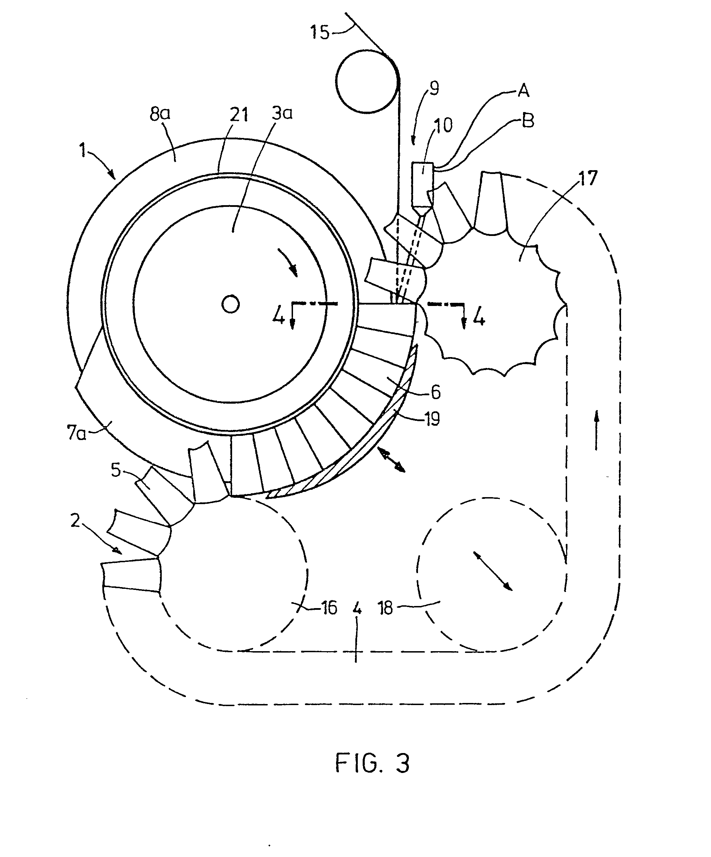

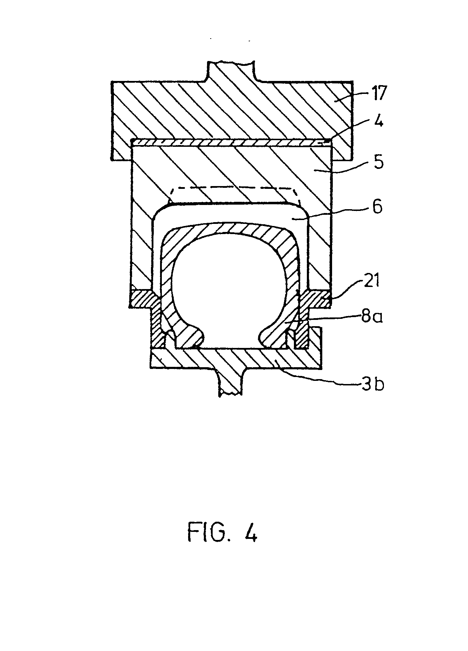

In Figur 3, 4 ist die Vorrichtung in ähnlicher Weise aufgebaut wie in Figur 1, 2; es werden deshalb die gleichen Bezugszeichen benutzt. Die Abwandlung besteht lediglich darin, dass anstelle der Trommel 3 eine drehbar gelagerte Felge 3a mit einem runderneuerungsbedürftigen Fahrzeugreifen 8a als Trägermaterial vorgesehen ist. Die Formsegmente 5 der Kette 4 weisen jedoch in diesem Falle kein negatives Zahnprofil auf, sondern ein solches für Reifen. An der Felge seitlich angeordnete Dichtringe 21 sorgen für die seitliche Abdichtung des gebildeten Hohlraumes 6. In den Hohlraum 6 läuft eine Verstärkungsbahn 15 ein.

Die Runderneuerung erfolgt während einer einzigen Umdrehung des Reifens 8a. Der fertige Reifen ist mit 7a bezeichnet.

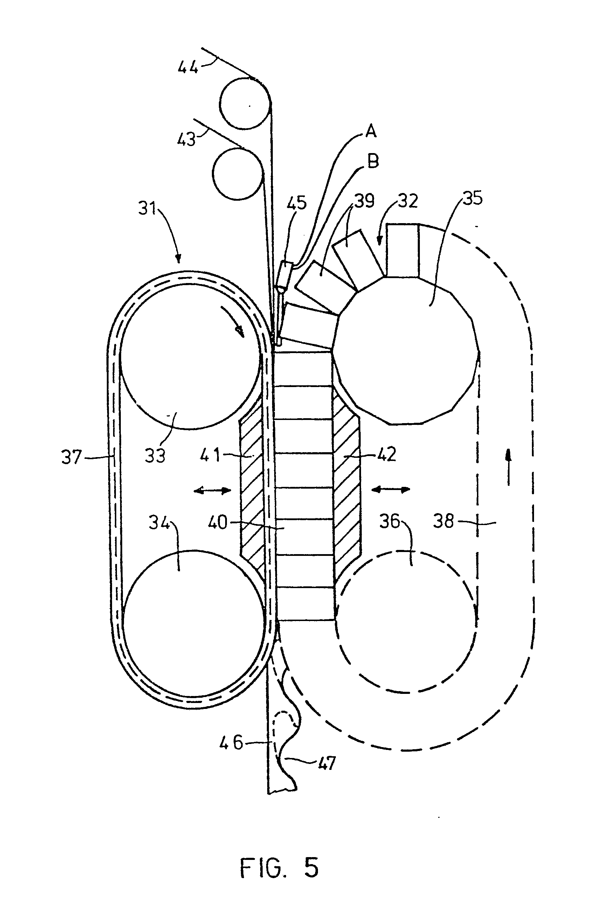

Die Vorrichtung gemäss Figur 5 weicht von denjenigen gemäss Figur 1, 2 bzw. 3, 4 ab. Bewegte Flächen 31, 32 laufen über Umlenkräder 33, 34 bzw. 35, 36 parallel zueinander um. Die bewegte Fläche 31 ist durch ein umlaufendes Band 37 gebildet, die bewegte Fläche 32 durch eine Kette 38 aus Formsegmenten 39. Dazwischen ist der Formhohlraum 40 gebildet. Im Bereich des Formhohlraumes 40 sind das Band 37 und die Kette 38 bzw. die Formsegmente 39 durch Gleitplatten 41, 42 abgestützt. In den Formhohlraum 40 laufen zwei Verstärkungsbahnen 43, 44 aus Gewebe ein. Mittels der Aufgabevorrichtung 45, welche denjenigen gemäss Figur 1, 2 entspricht, wird ein Polyurethanelastomer-bildendes Reaktionsgemisch aufgegeben. Bei dem herzustellenden Gegenstand handelt es sich um ein Förderband 46 mit Fördertaschen 47. Die Formsegmente 39 sind so gestaltet, dass sie jeweils einerseits das Innenprofil der Fördertaschen und andererseits deren Aussenprofil bilden.

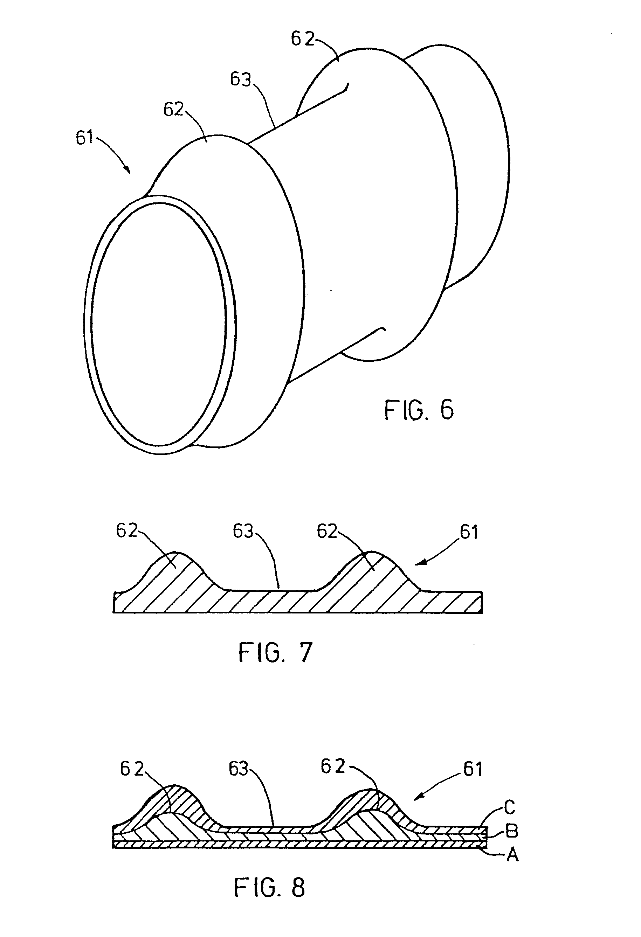

Der Walzenbezug 61 gemäss Figur 6, 7 besitzt Umfangswülste 62 zwischen denen sich ein flacher Umfangsabschnitt 63 erstreckt. Dieser Walzenbezug 61 wurde in einem einzigen Beschichtungsgang auf einer Vorrichtung gemäss Figur 1, 2 mit entsprechend gestalteten Formsegmenten hergestellt.

Der Walzenbezug 61 gemäss Figur 8 wurde durch mehrmaliges Beschichten gefertigt, wobei auf eine Grundschicht A gleicher Stärke und hoher Härte eine Schicht B mittlerer Härte mit Umfangswülsten 62 aufgebracht wurde, welche wiederum mit einer Schicht C weicher Härte abgedeckt wurde, wobei die Umfangswülste 62 noch verstärkt wurden.

Beispiel 1

Verwendet wird die Vorrichtung nach Fig. 1, 2. Die Flächen 1, 2, d.h. die Trägerbahn 8 sowie die Formsegmente 5 wandern mit einer Geschwindigkeit von 0,314 m/min. Der Querschnitt des Formhohlraumes 6 schwankt während des Vorschubes zwischen einem Minimalwert von 50 cm² und einem Maximalwert von 250 cm². Da die Fläche 1 eben ist, lässt sich fortlaufend die Höhe der Kontur der einlaufenden Formsegmente 5 elektronisch abtasten und die Oszillationsgeschwindigkeit der Aufgabevorrichtung 9 in Abhängigkeit davon steuern. Der Ausstoss der Aufgabevorrichtung 9 beträgt kontinuierlich 3,34 kg/min. Aufgegeben wird ein Gemisch aus
100 Gewichtsteilen TDI-Isocyanat und
10,4 Gewichtsteilen Diamin-Gemisch.
Die Verfestigungszeit beträgt 30 Sekunden.

Beispiel 2

Runderneuert wird ein Reifen mit der Vorrichtung gemäss Fig. 3, 4. Die Felge 3a rotiert mit 0,25 U/min. Die Aufgabevorrichtung 9 stösst 9,5 kg/min. reaktives Gemisch aus, bestehend aus
100 Gewichtsteilen TDI-Isocyanat und
36,6 Gewichtsteilen Polyester-Diamin-Gemisch.
Die Verfestigungszeit beträgt 45 Sekunden.

**Patentansprüche**

1. Verfahren zum kontinuierlichen Herstellen von Gegenständen oder Beschichtungen (7, 7a, 46, 61) mit kompliziert geformten Konturen (20, 47, 62, 62'), wobei ein flüssiges Material in den zwischen mindestens zwei wandernden endlosen formgebenden Flächen (1; 2, 31; 32) gebildeten Formhohlraum (6, 40) an einem Ende eingebracht wird, im Formhohlraum (6, 40) ausgehärtet und anschliessend entformt wird, dadurch gekennzeichnet, dass die wandernden Flächen (1; 2, 31; 32) zumindest im Bereich der Materialaufgabe (49, 45) abwärts bewegt werden und der Strahl zugeführten Materials quer zur Vorschubrichtung der Flächen (1; 2, 31; 32) hin- und hergeführt wird; und dass dabei unter Berücksichtigung der Vorschubgeschwindigkeit der Flächen (1; 2, 31; 32) und der jeweiligen Weite des Hohlraumes (6, 40) unterhalb des Strahles, die zugeführte Materialmenge im Sinne einer gleichmässigen überschichtenden Füllung des Formhohlraumes (6, 40) gesteuert wird.

2. Verfahren nach Anspruch 1, dadurch gekennzeichnet, dass die Steuerung durch Variation der Vorschubgeschwindigkeit der wandernden Flächen (1; 2, 31; 32) bewirkt wird.

3. Verfahren nach Anspruch 1, dadurch gekennzeichnet, dass die Steuerung bei gleichbleibender Zuführmenge durch Variation der Oszillationsgeschwindigkeit des Strahles bewirkt wird.

4. Verfahren nach Anspruch 1, dadurch gekennzeichnet, dass die Steuerung bei gleichbleibender Oszillationsgeschwindigkeit des Strahles durch Variation der Zuführmenge bewirkt wird.

5. Verfahren nach einem der Ansprüche 1 bis 4, dadurch gekennzeichnet, das als flüssiges Material Polymerverbindungen, wie Polyurethanelastomere auf Basis Polyether und/oder Polyester, vorzugsweise mit einer Aushärtezeit von 0,5 bis 180 Sekunden, verwendet werden.

6. Vorrichtung zur Durchführung des Verfahrens nach den Ansprüchen 1 bis 5, bestehend aus mindestens zwei umlaufenden endlosen Flächen (1; 2, 31; 32), von denen mindestens eine sich aus einzelnen Formsegmenten (5, 39) zusammensetzt, wobei diese Flächen (1; 2, 31; 32) zwischen sich einen seitlich abgedichteten Formhohlraum (6, 40) einschliessen und am Eingang des Formhohlraumes (6, 40) eine Aufgabevorrichtung (9, 45) angeordnet ist, dadurch gekennzeichnet, dass die wandernden Flächen (1; 2, 31; 32) im Bereich der Aufgabevorrichtung (9, 45) abwärts gerichtet sind und dass die Aufgabevorrichtung (9, 45) quer hin- und herfahrbar ist und der Antrieb (13, 14) der Aufgabevorrichtung (9, 45) und/oder der der Aufgabevorrichtung (9, 45) zugeordneten Pumpe(n) mit einem Programmsteuergerät (14) verbunden sind.

7. Vorrichtung nach Anspruch 6, dadurch gekennzeichnet, dass ein Rotationskörper (3, 8a) eine der wandernden Flächen (1, 2) darstellt, dessen Umfangsfläche teilweise von den Formsegmenten (6) der anderen wandernden Fläche (2) unter Bildung des Formhohlraumes (6) abgedeckt ist.

8. Vorrichtung nach Anspruch 7, dadurch gekennzeichnet, dass der Rotationskörper (8a) aus einem runderneuerungsbedürftigen Fahrzeugreifen besteht.

9. Vorrichtung nach Anspruch 7, dadurch gekennzeichnet, dass der Rotationskörper aus einem zu beschichtenden Walzenkörper besteht.

10. Vorrichtung nach Anspruch 6, dadurch gekennzeichnet, dass die wandernden Flächen (31; 32) aus über Umlenkwalzen (33; 34; 35; 36) umlaufenden, endlosen, parallel angeordneten Bändern (37, 38) bestehen, von denen mindestens eines Formsegmente (39) aufweist, wobei den Bändern (37; 38) im Bereich des gebildeten Formhohlraumes (40) rückseitig Abstützungen (41; 42) zugeordnet sind.

## Claims

1. Process for the continuous production of objects or coatings (7, 7a, 46, 61) having complex moulded contours (20, 47, 62, 62′) in which a liquid material is introduced at one end of the mould cavity (6, 40) formed between at least two migrating continuous shaping surfaces (1; 2, 31; 32), is cured inside the mould cavity (6, 40) and is subsequently demoulded, characterized in that the migrating surfaces (1; 2, 31; 32) are displaced in the downstream direction at least in the region of dispensing of the material (49, 45) and the jet of dispensed material is fed to and fro transversely to the advance direction of the surfaces (1; 2, 31; 32); and in that here, taking account of the speed of advance of the surfaces (1; 2, 31; 32) and of the particular width of the cavity (6, 40) beneath the jet, the quantity of material dispensed is controlled to achieve an even coating filling of the mould cavity (6, 40).

2. Process according to Claim 1, characterized in that the control is achieved by altering the rate of advance of the migrating surfaces (1; 2, 31; 32).

3. Process according to Claim 1, characterized in that the control is achieved by varying the rate of oscillation of the jet while holding the dispensing rate constant.

4. Process according to Claim 1, characterized in that the control is achieved by altering the dispensing rate while holding the speed of oscillation of the jet constant.

5. Process according to one of Claims 1 to 4, characterized in that polymer compounds, such as pulyurethane elastomers based on polyether and/or polyester, preferably having a curing period in the range 0.5 to 180 seconds, are used as the liquid material.

6. Device for carrying out the process according to Claims 1 to 5, comprising at least two circulating continuous surfaces (1; 2, 31; 32) of which at least one comprises individual mould segments (5, 39), where these surfaces (1; 2, 31; 32) enclose a laterally sealed mould cavity (6, 40) and a coating device (9, 45) is arranged at the entry to the mould cavity (6, 40), characterized in that the migrating surfaces (1; 2, 31; 32) are turned in the downstream direction in the region of the dispensing device (9, 45) and in that the dispensing device (9, 45) is displaceable transversely to and fro, and the drive (13, 14) of the dispensing device (9, 45) and/or of the pump(s) fitted to the dispensing device (9, 45) is (are) connected to a programme control unit (14).

7. Device according to Claim 6, characterized in that one of the migrating surfaces (1, 2) is represented by a rotating body (3, 8a), the circumferential surface of which in the formation of the mould cavity (6) is partly covered by mould segments (6) of the other migrating surface (2).

8. Device according to Claim 7, characterized in that the rotating body (8a) comprises a vehicle tyre which needs rebuilding.

9. Device according to Claim 7, characterized in that the rotating body comprises a roller body which is to be coated.

10. Device according to Claim 6, characterized in that the migrating surfaces (31; 32) comprise continuous, parallel aligned bands (37, 38) circulating over deflection rollers (33; 34; 35; 36), at least one of which has mould segments (39), where the bands (37; 38) are equipped with supporting structures (41; 42) to the rear in the region of the mould cavity (40) which is formed.

## Revendications

1. Procédé pour la fabrication en continu d'objets ou de revêtements (7, 7a, 46, 61) avec des contours (20, 47, 62, 62′) de formes compliquées, dans lequel un matériau liquide est introduit d'un côté dans une cavité de moulage (6, 40) formée entre au moins deux surfaces de moulage sans fin, animées d'un mouvement continu de défilement (1; 2, 31; 32), durcit dans la cavité de moulage (6, 40), puis est démoulé, caractérisé en ce que les surfaces en mouvement (1; 2, 31; 32) sont, au moins dans la zone de l'alimentation en matière (49, 45), déplacées vers le bas et le jet de matière amenée est dirigé en va-et-vient perpendiculairement à la direction d'avance des surfaces (1; 2, 31; 32); et que, compte tenu de la vitesse d'avance des surfaces (1; 2, 31; 32) et de la largeur instantanée de la cavité (6, 40) sous le jet, la quantité de matière introduite est commandée dans le sens d'un remplissage régulièrement réparti de la cavité de moulage (6, 40).

2. Procédé selon la revendication 1, caractérisé en ce que la commande est réalisée par variation de la vitesse d'avance des surfaces en mouvement (1; 2, 31; 32).

3. Procédé selon la revendication 1, caractérisé en ce que la commande est réalisée par variation de la vitesse d'oscillation du jet pour un débit d'amenée constant.

4. Procédé selon la revendication 1, caractérisé en ce que la commande est réalisée par variation du débit d'amenée pour une vitesse d'oscillation constante du jet.

5. Procédé selon l'une des revendications 1 à 4, caractérisé en ce que l'on utilise comme matériau liquide des composés polymères comme les élastomères de polyuréthane à base de polyéthers et/ou de polyesters, de préférence avec un temps de durcissement de 0,5 à 180 secondes.

6. Dispositif pour l'exécution du procédé selon les revendications 1 à 5, consistant en au moins deux surfaces défilant sans fin (1; 2, 31; 32) et dont au moins l'une est composée de segments de moulage individuels (5, 39), ces surfaces (1; 2, 31; 32) s'inscrivant dans une cavité de moulage (6, 40) fermée latéralement et un dispositif d'alimentation (9, 45) étant prévu à l'entrée de la cavité de moulage (6, 40), caractérisé en ce que les surfaces mobiles (1; 2, 31; 32) sont orientées vers le bas dans la zone du dispositif d'alimentation (9, 45) et que le dispositif d'alimentation (9, 45) peut se déplacer transversalement en un mouvement de va-et-vient et les moyens d'entraînement (13, 14) du dispositif d'alimentation (9, 45) et/ou de la ou des pompe(s) associée(s) au dispositif d'alimentation sont reliés à un appareil de commande à programme (14).

7. Dispositif selon la revendication 6, caractérisé en ce qu'une des surfaces mobiles (1, 2) est constituée par un corps de révolution (3, 8a) dont la surface périphérique est partiellement recouverte par les segments de moulage (6) de l'autre surface mobile (2) en formant la cavité de moulage (6).

8. Dispositif selon la revendication 7, caractérisé en ce que le corps de révolution (8a) consiste en un pneu de véhicule à rechaper.

9. Dispositif selon la revendication 7, caractérisé en ce que le corps de révolution consiste en un corps de cylindre à revêtir.

10. Dispositif selon la revendication 6, caractérisé en ce que les surfaces en mouvement (31; 32) consistent en bandes sans fin (37, 38) disposées parallèlement et défilant sur des rouleaux de renvoi (33; 34; 35; 36), et dont une au moins présente des segments de moulage (39), les bandes (37; 38) étant, dans la zone de la cavité de moulage (40), soutenue par des supports (41; 42) dorsaux.

EP 0 167 775 B1

FIG. 1

FIG. 2

7

FIG. 3

FIG. 4

FIG. 5

FIG. 6

FIG. 7

FIG. 8